# EUROPEAN PATENT SPECIFICATION

(11) **EP 2 878 545 B1**
(45) Date of publication and mention of the grant of the patent: **21.02.2018**
(21) Application number: 13819699.3
(22) Date of filing: 20.06.2013
(51) Int. Cl.: B65B 31/02, H02M 1/00, B29C 65/22, B65B 51/10, G06F 1/26

(54) **VACUUM PACKAGING MACHINE FOR USE IN HOUSE AND VEHICLE**
VAKUUMVERPACKUNGSMASCHINE ZUR VERWENDUNG ZUHAUSE UND IN FAHRZEUGEN
MACHINE D'EMBALLAGE SOUS VIDE POUR L'UTILISATION DANS UN DOMICILE ET DANS UN VÉHICULE

(30) Priority: 16.07.2012 KR 20120077121
(43) Date of publication of application: 03.06.2015
(73) Proprietor: CSE Co., Ltd., Siheung-si, Gyeonggi-do 429-854 (KR)
(72) Inventor: SUNG, Ei-Jae, Siheung-si Gyeonggi-do 429-854 (KR)
(74) Representative: Betten & Resch
(86) International application number: PCT/KR2013/005454
(87) International publication number: WO 2014/014209

(56) References cited:
- JP-A- H10 278 908
- KR-A- 20120 136 282
- KR-B1- 100 523 544
- KR-B1- 100 818 627
- US-A1- 2003 151 936
- US-A1- 2005 050 860
- US-A1- 2012 060 447
- US-B1- 6 936 790

## Description

### Technical Field

The present invention relates, in general, to a vacuum packaging machine for packaging food in a vacuum packaging film and preserving food in a vacuum so as to prevent the oxidation or spoilage of food and, more particularly, to a vacuum packaging machine for home and vehicle use, which has a combination Alternating Current (AC)-Direct Current (DC) power module enabling the vacuum packaging machine to use the DC power of a vehicle as well as commercial AC power used in homes.

### Background Art

Generally, food is packaged in wrapped or vinyl paper and kept in a refrigerator.

Such refrigeration enables food to be kept fresh only for a predetermined period of time, but is problematic in that over a long period of time food is oxidized or spoiled due to air contained in a packaging wrapper.

In order to solve such problems, vacuum packaging technology for keeping food by placing the food in a package and removing air from the package prior to sealing the package has been developed so as to prevent the oxidization and spoilage of food even when stored for a long period of time.

If vacuum packaging is performed, there are advantages in that the freshness of food can be maintained, the expiration date of food can be lengthened, food can be prevented from oxidizing in the air, and moisture contained in the food can be kept from escaping, thus not only preventing the weight of food from decreasing, and suppressing the spoilage of food and the proliferation of microbes, but also preserving food for a long period of time without changing the original taste and smell of the food, with the result that vacuum packaging has been widely used in food processing industry and in the home.

A device for performing such vacuum packaging is a vacuum packaging machine.

Recently, as vehicles are popularized, and an interest in health and leisure activities has increased, travel using vehicles has increased.

When traveling using vehicles, travelers frequently carry food and simply cook that food at their travel destination.

In this case, since travelers typically carry more food than is needed, some leftover food is inevitably present, and the travelers must take back such leftover food. There are many cases where food may spoil or may lose its freshness while being taken back, and then the leftover food is thrown away even if it is taken back.

Therefore, there is a need to preserve foods leftover from a travel destination via vacuum packaging and bring back the leftover food in a fresh state.

However, generally, there is no power to drive a vacuum packaging machine at travel destinations, and the only power that can be used in such locations is from the battery of the driven vehicle.

Accordingly, there is a need to enable a vacuum packaging machine to be driven using the battery of the vehicle.

Meanwhile, as conventional technologies related to a vacuum packaging machine, various types of technologies are presented, for example, Korean Patent No. 629419 filed by Ahn Joon Young and entitled "Chamber housing and vacuum packing apparatus using the same"; Korean Patent No. 355703 filed by Zeropack Co., Ltd. and entitled "Vacuum packing apparatus for refrigerator"; Korean Patent No. 423877 filed by Lee Kyul Joo and entitled "Vacuum packaging machine"; and Korean Patent No. 421195 filed by SEHEE Corp Co., Ltd. and entitled "Apparatus for vacuum sealing plastic bags with embossing means". However, existing vacuum packaging machines as well as the above registered patents are for home use or for business use and exploit commercial AC power, and thus it is impossible to use the battery of a vehicle that supplies DC power as a power source.

A vacuum packaging machine which can be selectively operated at an AC or a DC power supply is described in document US6936790.

A universal power adapter for connection to an AC mains supply or a vehicle on-board power supply is described in document US2003151936.

### Disclosure

### Technical Problem

The present invention has been made keeping in mind the above problems occurring in the conventional vacuum packaging machine and an object of the present invention is to provide a vacuum packaging machine for home and vehicle use, in which a combination AC-DC power module capable of receiving not only commercial AC power, but also DC power of a vehicle battery and utilizing the received power as drive power is mounted, thus enabling the vacuum packaging machine to be used both for home use and for vehicle use.

Another object of the present invention is to provide a vacuum packaging machine for home and vehicle use, which notifies a user of deficiency in the capacity of a vehicle battery via a display module if the capacity of the vehicle battery is deficient due to the overdischarge of the battery when the vacuum packaging machine is connected to and used by the vehicle, so that the use of the vacuum packaging machine is stopped or the vehicle starts to charge the vehicle battery, thus preventing the occurrence of an incident in which the vehicle does not start due to the full discharge of the battery.

A further object of the present invention is to provide a vacuum packaging machine for home and vehicle use, which cuts off the supply of power to a heater via a thermal fuse when the heating temperature of the heater exceeds a reference temperature, thus preventing the occurrence of an accident attributable to overheating.

These objects are solved by the features of claim 1. The dependent claims recite advantageous embodiments of the invention.

### Technical Solution

A vacuum packaging machine for home and vehicle use according to the present invention to accomplish the above objects includes an Alternating Current (AC) input terminal for receiving commercial AC power, a Switching-Mode Power Supply (SMPS) for converting the commercial AC power received from the AC input terminal into Direct Current (DC) power, a DC input terminal for receiving DC power from a vehicle, and a combination AC-DC power module including a controller for receiving the DC power from the SMPS or the DC input terminal and controlling a heater and a vacuum pump.

The controller may be configured to, when a magnitude of voltage received from the DC input terminal is less than or equal to a reference voltage, display the magnitude of the voltage via a display module, thus providing notification that a capacity of a vehicle battery is deficient.

The vacuum packaging machine may further include a heater supplied with power from the controller and configured to generate heat, and a temperature sensor configured to sense heating temperature of the heater, and allow the controller to cut off supply of the power to the heater when the heating temperature is equal to or greater than a reference temperature.

The controller drives the pump and the heater in a vacuum mode or a semi-vacuum mode in compliance with a command signal.

The vacuum packaging machine may further include a main body containing the pump and the heater; and a cover for opening and closing the main body, wherein the main body may include, on a top surface thereof, an intake connected to the pump, and a lower space-defining member provided to protrude and configured to define a space in which a mouth of a packaging film is inserted and arranged and in which the intake is arranged and to minimize inflow of external air into the space, and wherein the main body may further include a falling groove formed in the space and configured to allow foreign materials, discharged from the packaging film during a packaging process, to fall to and accumulate in the falling groove, and a discharge member detachably provided in the falling groove and configured to enable the foreign materials that have fallen and have accumulated in the falling groove to be easily dumped.

### Advantageous Effects

The vacuum packaging machine for home and vehicle use according to the present invention having the above configuration can be driven using not only commercial AC power in the home, but also the DC power of a vehicle battery in a vehicle, so that food purchased at a store and food leftover from a travel destination can be immediately vacuum-packaged on that location using the vehicle and can then be kept fresh on the way back.

Further, the present invention is configured to, when the capacity of a vehicle battery decreases to a reference voltage or less upon vacuum-packaging using a vehicle, inform a user of the low capacity of the vehicle battery, thus preventing the occurrence of an incident in which the vehicle will not start due to the overdischarge of the vehicle battery, and is configured to, when the heating temperature of a heater increases to a reference temperature or higher, cut off the supply of power to the heater, thus preventing overheating.

Furthermore, the present invention can be operated in a vacuum mode and a semi-vacuum mode, so that food that is easily crumbled is packaged in the semi-vacuum mode, thereby preventing the food from crumbling.

Furthermore, foreign materials discharged from a packaging film during the packaging process may fall to and accumulate in a falling groove, and a discharge member detachably provided in the falling groove enables the accumulated foreign materials to be easily swept away, thus preventing the foreign materials from being sucked into an intake and from blocking the intake.

### Description of the Drawings

FIG. 1 is a block diagram showing the power module of a vacuum packaging machine for home and vehicle use and individual parts operated by the power module according to the present invention;
FIG. 2 is a perspective view showing the vacuum packaging machine for home and vehicle use according to the present invention; and
FIG. 3 is a perspective view of a shape in which a cover is opened in FIG. 2.

***Description of the Reference Numerals in the Drawings***

| | |
|---|---|
| 1: heater | 2: thermal fuse |
| 4: pressure sensor | 3: vacuum pump |
| 10: main body | 11: seating part |
| 13: fastening protrusion | |
| 20: cover | |
| 30: sensing means | 31: sensing switch |
| 40: locking means | 41: catch protrusion |
| 41a: fastening part | 42: latch |
| 42a: guide bar | 42b: hook |
| 42c: rising/falling protrusion | 42d: entry induction part |
| 42e: support protrusion | 42f: stop protrusion |
| 43: locking part | 44: electromagnet part |
| 44a: body | 44b: connection protrusion |
| 44c: terminal part | 45: locking protrusion part |
| 45a: turning plate | 45b: locking protrusion |
| 45c: partition protrusion | |
| 50: release means | 51: coupling protrusion |
| 60: combination AC-DC power module | 61: AC input terminal |
| 62: SMPS | 63: DC input terminal |
| 64: controller | |

### Best Mode

Hereinafter, a vacuum packaging machine for home and vehicle use according to the present invention will be described in detail with reference to the attached drawings.

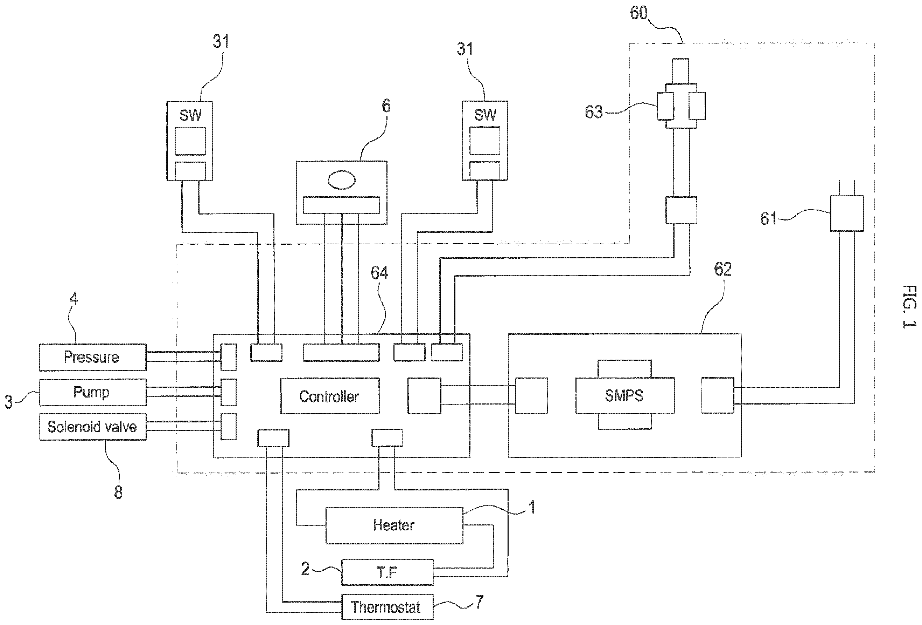

First, referring to FIG. 1, a combination AC-DC power module 60 that is operable both for home use based on commercial AC power and for vehicle use based on the DC power of a vehicle battery, and individual parts that are controlled by the power module 60 will be described below.

The combination AC-DC power module 60 includes an AC input terminal 61, a Switching-Mode Power Supply (SMPS) 62, a DC input terminal 63, and a controller 64.

The AC input terminal 61 receives commercial AC power and supplies it to the SMPS 62. As the AC input terminal 61, a power plug is generally used.

The SMPS 62 converts the commercial AC power input through the AC input terminal 61 into DC power, and supplies the DC power to the controller 64.

Since the voltage and frequency of the commercial AC power differ for each country (in Korea, as commercial AC power, a power of 220 V/60 Hz is used), it is preferable to allow the SMPS 62 to receive a "free voltage" of 100-240 V/50-60 Hz and perform processing, thus enabling the packaging machine to be used regardless of country.

The magnitude of the DC power converted from the commercial AC power by the SMPS 62 is preferably identical to the magnitude of the DC power of the vehicle battery received through the DC input terminal 63. Typically, the power of the vehicle battery provides a voltage of 12 V.

The DC input terminal 63 receives the DC power from the vehicle battery and supplies it to the controller 64. As the DC input terminal 63, a cigarette socket is generally used.

The controller 64 receives the DC power from the SMPS 62 or the DC input terminal 63, and controls the heater 1, the vacuum pump 3, and the display module 6 of the vacuum packaging machine.

The controller 64 identifies and recognizes whether the DC power has been applied from the SMPS 62 or from the DC input terminal 63, checks the voltage magnitude of the DC power if it is determined that the DC power has been applied from the DC input terminal 63, that is, from the battery of the vehicle, and notifies the user of a low voltage magnitude via the display module 6 when the voltage magnitude is less than or equal to a reference voltage (e.g., 10.5 V). Therefore, the controller 64 prevents the occurrence of an incident in which the vehicle will not start due to the overdischarge of the vehicle battery attributable to the use of the vacuum packaging machine, while notifying the user that the power of the vehicle battery, input as power for the normal operation of the vacuum packaging machine, is deficient.

In this case, the checking of the voltage magnitude may be performed by checking voltage input to the SMPS 62, voltage output from the SMPS 62, voltage input to the heater 1, or voltage input to the pump 3. When the pump 3 is operated to evacuate a packaging film, the voltage drop of the battery does not occur, but when the pump 3 and the heater 1 are operated to seal the packaging film, the battery voltage may drop, and thus it is preferable to check the voltage input to the heater 1.

For reference, the voltage of the power supplied by the vehicle battery is typically 12 V. However, since the generator of the vehicle (power generator) supplies power after the vehicle has started, a voltage of about 14 V ± 0.5 V slightly higher than 12 V is supplied. Therefore, the controller 64 has strong durability to such an extent that it is not influenced by an input voltage even if a voltage of 14 V ± 0.5 V is input.

Therefore, the controller 64 is preferably programmed such that a range from 10.5 V that is a minimum reference voltage required to prevent the overdischarge of the battery to 14.5 V that is a maximum reference voltage supplied by the generator when the vehicle starts is divided into intervals of 0.5 V and then a suitable operation is performed.

For example, the controller 64 is configured to, when a voltage less than or equal to 10.5 V is input upon driving the heater, output a warning sound, or turn on or blink a warning lamp, and when a voltage greater than 10.5 V is input, shorten the driving time of the heater for sealing at intervals of 0.5 V (e.g., [voltage-heater driving time] = 11 V - 28 seconds, 11.5 V - 25 seconds, 12 V - 23 seconds, 12.5 V - 20 seconds, more than 12.5 V - 17 seconds), thus preventing the packaging film from being incompletely sealed or excessively sealed.

The display module 6 may be implemented using a monitor screen or a Light Emitting Diode (LED) lamp, and a speaker may be used to output a warning sound and provide notification, instead of providing notification using the display module 6.

Referring to FIG. 1, as other components of the vacuum packaging machine controlled by the controller 64, there are the heater 1, the vacuum pump 3, a pressure sensor 4, safety switches 31, etc.

The heater 1 is supplied with the power from the controller 64 to generate heat, and seals a vacuum packaging film by thermally-bonding the vacuum packaging film at high temperature caused by the generated heat.

A thermal fuse 2 is connected to a power line that electrically connects the heater 1 and the controller 64 to supply power, and a temperature sensor 7 is connected to the controller.

The thermal fuse 2 that is an ultimate stabilization device is cut to prevent power from being supplied to the heater when the temperature of the thermal fuse rises to a preset temperature or higher due to the failure of the controller or the like. When the thermal fuse 2 is cut, it must be replaced with a new one.

Since the temperature sensor 7 is arranged adjacent to the heater 1, it senses the temperature of heat emitted from the heater 1, and transmits the sensed temperature to the controller 64. Accordingly, when the sensed temperature (that is, the heating temperature of the heater) becomes equal to or greater than the reference temperature, the controller 64 prevents the heating temperature of the heater 1 from rising by cutting off the supply of power to the heater 1, and also prevents products from being thermally deformed to further improve safety by displaying an error attributable to the overheating of the heater.

Furthermore, when the temperature sensor 7 senses that the heating temperature of the heater 1 falls to less than the reference temperature (typically set to a temperature lower than a reference temperature when the temperature sensor 7 is opened) due to the cutoff of the supply of power, the controller 64 recognizes that the heating temperature of the heater has fallen to less than a suitable temperature, and normally operates to allow power to be supplied to the heater 1.

For reference, the temperature sensor 7 may be implemented using a bimetal sensor that is opened or shorted according to the temperature, or a positive temperature coefficient (PTC) element or a negative temperature coefficient (NTC) element, the resistance of which increases or decreases according to the temperature.

The vacuum pump 3 is supplied with power form the controller 64 and evacuates a vacuum packaging film by removing air from the vacuum packaging film.

The pressure sensor 4 senses the pressure of the vacuum packaging film caused by the suction of the vacuum pump 3 and transmits the sensed pressure to the controller 64.

When the pressure transmitted from the pressure sensor 4 is less than or equal to a reference pressure, the controller 64 determines that the vacuum packaging film has been evacuated, stops the driving of the vacuum pump 3, and supplies power to the heater 1 so that vacuum packaging is performed via the sealing of the vacuum packaging film based on thermal bonding.

When preparation for vacuum packaging is performed, the safety switches 31 sense that the cover 20 has closed the main body 10, and transmit the sensed results to the controller 64. Then, vacuum packaging work starts in earnest only after a signal has been received from the safety switches.

That is, the heater is not driven until the signal from the safety switches 31 is received. When the signal from the safety switches is not received, only the vacuum pump for evacuating a vacuum container or the like is designated to be driven, thus eliminating the danger of a fire attributable to the operation of the heater when the cover is opened.

The controller 64 drives the pump 3 and the heater 1 in a vacuum mode and a semi-vacuum mode depending on the manipulation of the user.

The vacuum mode is used to package food that is safe from crumbling, and the semi-vacuum mode is used to package food having a possibility of crumbling.

Methods of selecting the vacuum mode and the semi-vacuum mode include a method of selecting the vacuum mode when the user presses a start button for a short time and selecting the semi-vacuum mode when the user presses the start button for a long time (e.g., 2 seconds or longer), and other methods of respectively providing a vacuum mode button and a semi-vacuum mode button and allowing the user to select and press a desired button.

Since the above description is based on the vacuum mode, a description of the vacuum mode is omitted.

A method for driving the vacuum packaging machine in the semi-vacuum mode and an example of a driving scheme in the method will be described below.

When the user presses the start button longer (e.g., 2 seconds or longer), the packaging machine is driven in the semi-vacuum mode, so that the pump 3 is operated to remove air contained in a packaging film while the start button is being pressed, and the packaging film is semi-evacuated to a desired degree. Then, when the user removes his or her hand from the start button, the pump stops its operation, and the heater is immediately operated to seal the packaging film.

In this case, it is more preferable to implement an operation where, if the user presses the cover with his or her both hands after removing his or her hand from the start button (this operation may be sensed by the safety switches 31), the pump stops its operation and the heater is then operated, than an operation where the pump stops its operation and the heater is operated immediately when the user removes his or her hand from the start button. By means of a force by which the user presses the cover, the packaging film is primarily sealed. Thereafter, by the pump that is driven for 4 to 5 seconds, the packaging film is secondarily and completely sealed, and thus the packaging film is packaged in a semi-vacuum state.

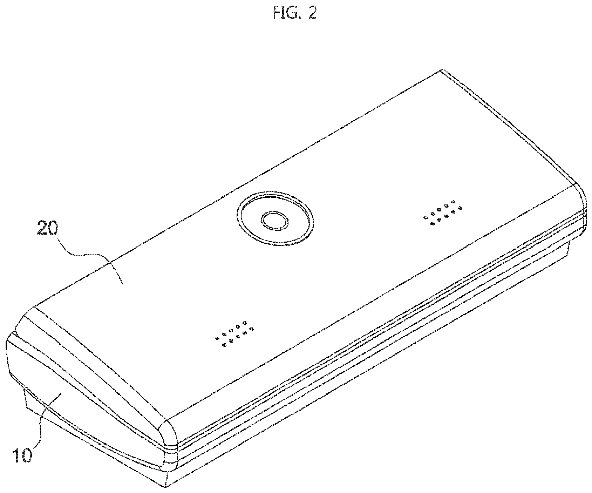

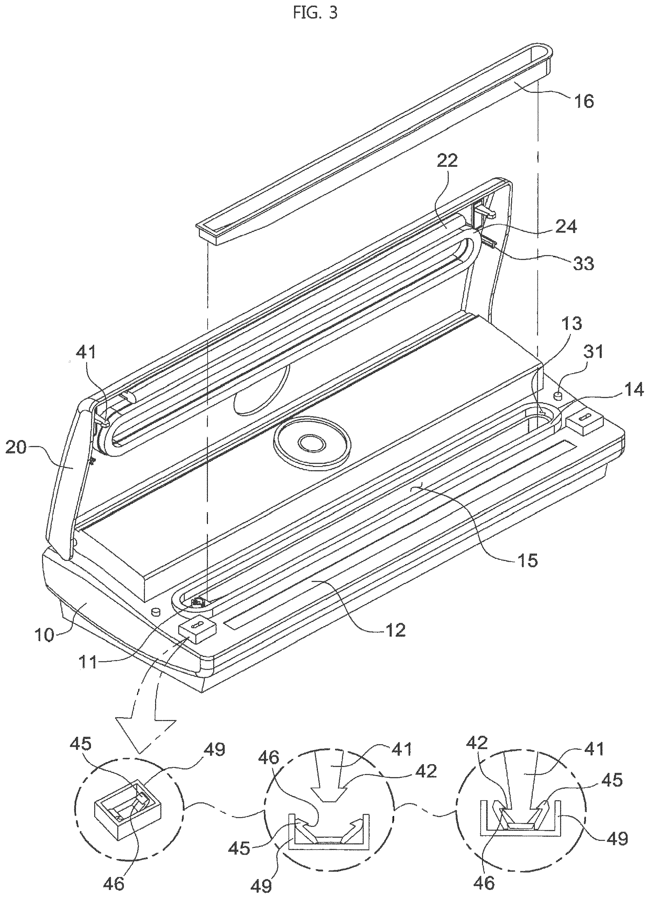

Below, the mechanical configuration of the vacuum packaging machine according to the present invention will be described with reference to FIGS. 2 to 8.

The mechanical configuration of the vacuum packaging machine according to the present invention includes a main body 10, a cover 20 covering the main body 10, sensing means 30 provided on both the main body 10 and the cover 20 to correspond to each other and configured to sense the opening and closing of the cover 20, and locking means 40 configured to lock the cover 20 to the main body 10.

The main body 10 contains a vacuum pump 3 for vacuum packaging, and includes, on the top surface thereof, an intake 11 connected to the pump 3 to suck ambient air and a lower thermo-compression bonding part 12 containing the heater 1.

Further, on the top surface of the main body 10, a lower space-defining member 14 is provided to protrude and is configured to define a space 13 in which the mouth of the packaging film is inserted and arranged and the intake 11 is arranged, and to minimize the inflow of external air into the space 13. In the space 13, a falling groove 15 for allowing foreign materials, discharged from the packaging film during a packaging process, to fall to and accumulate in the falling groove is formed. The falling groove 15 includes a detachably provided discharge member 16 so that the foreign materials that have fallen and accumulated may be easily dumped. The foreign materials fall to and accumulate in the discharge member 16 rather than in the falling groove 15.

The cover 20 is provided on the top of the main body 10 and is hingedly coupled to the rear portion of the main body 10 to enable the vacuum packaging machine to be opened and closed via a turning operation.

On the bottom surface of the cover 20, an upper thermo-compression bonding part 22 is formed to correspond to the lower thermo-compression bonding part 12 provided on the main body 10, so that the packaging film is thermally compressed with the packaging film caught between the lower thermo-compression bonding part 12 and the upper thermo-compression bonding part 22, thus sealing the packaging film.

Further, on the bottom surface of the cover 20, an upper space-defining member 24 corresponding to the lower space-defining member 14 is formed to protrude.

The lower space-defining member 14 and the upper space-defining member 24 come into contact with each other to define the space 13, and minimize the inflow of external air into the space 13. In this case, when the lower space-defining member 14 and the upper space-defining member 24 come into tight contact with each other, escaping air from the packaging film may be interfered with when the pump 3 is operated. Accordingly, it is preferable that the lower space-defining member 14 and the upper space-defining member 24 be made of a material such as a sponge and that fine protrusions for forming holes through which internal air can escape from the packaging film be formed on the inner surface of the packaging film.

The sensing means 30 are formed on both the main body 10 and the cover 20 to correspond to each other, and configured to sense the opening and closing states of the cover 20 and to transmit an open/close signal to the controller 64.

The sensing means 30 are implemented as safety switches 31 that are provided on both sides of the front portion of the main body 10 and that protrude upwards, and are configured such that, when the cover 20 is closed and the switches are pressed by the cover 20 and then turned on, the controller 64 senses such a turn-on operation. The controller 64 drives the heater 1 only while the safety switches 31 are turned on, and does not drive the heater in consideration of safety although the user's manipulation signal is input and the pump is operated to evacuate a container while the safety switches 31 are turned off.

In this case, contact protrusions 33 protruding downwards are preferably formed on the cover 20 to correspond to the safety switches 31, so that the safety switches 31 may be more completely pressed, thus improving the reliability of operation.

The locking means 40 are configured to lock the cover 20 to the main body 10 in a close mode and to unlock the cover to be open in an open mode.

The locking means include locking pins 41 respectively provided on both sides of the bottom surface of the cover 20 to protrude therefrom, each locking pin 41 having locking hooks 42 formed on both ends of a lower portion thereof; locking catches 45 respectively provided on both sides of the top surface of the main body 10 at locations corresponding to those of the locking pins 41, each locking catch having stop protrusions 46 locked by the locking hooks 42; and housings 49 for accommodating the locking catches 45 so that the locking catches may be inserted into or extracted from the housings 49.

Whenever the locking catches 45 are pressed by the locking pins 41, they are repeatedly inserted into and extracted from the housings 49. In other words, when the locking catches 45 are pressed, they are inserted into the housings 49, when the locking catches 45 are pressed again, they are extracted from the housings 49, and when the locking catches 45 are pressed once again, they are inserted into the housings 49.

Further, in a state in which the locking catches 45 are extracted from the housings 49, the distance between the stop protrusions 46 is long, and then the stop protrusions 46 are unlocked from the locking hooks 42 to enable the cover 20 to be opened. In a state in which the locking catches 45 are inserted into the housings 49, the distance between the stop protrusions 46 becomes shorter, and then the stop protrusions 46 are locked to the locking hooks 42 to lock the cover 20 so that it is not opened.

The locking means 40 according to the present invention are locking devices having characteristics of being locked when pressed once, and being unlocked when pressed once more. The locking means 40 automatically perform the operation of, if a vacuum has been formed in a locked state so as to perform vacuum packaging, pressing the locking means once more while the cover is moving downwards due to the force of a vacuum. When the locking means 40 are pressed once more, a solenoid valve 8 is operated to release a vacuum state, thus enabling the cover to be automatically opened.

As described above, in the description of the present invention, although the vacuum packaging machine for home and vehicle use which has a specific shape and structure has been described with reference to the attached drawings, the present invention can be modified and changed in various manners by those skilled in the art, and such modifications and changes should be interpreted as being included in the scope of the present invention, as defined by the appended claims.

## Claims

1. A vacuum packaging machine for home and vehicle use, comprising:
an Alternating Current (AC) input terminal (61) for receiving commercial AC power;
a Switching-Mode Power Supply SMPS (62) for converting the commercial AC power received from the AC input terminal (61) into Direct Current (DC) power;
a DC input terminal (63) for receiving DC power from a vehicle;
a combination AC-DC power module including a controller (64) for receiving the DC power from the SMPS (62) or the DC input terminal (63) and controlling a heater (1) and a vacuum pump (3);
a main body (10) containing the pump (3) and the heater (1); a cover (20) for opening and closing the main body (10); and
**characterized by** a locking means (40) including locking pins (41) respectively provided on both sides of a bottom surface of the cover (20) to protrude therefrom and each having locking hooks (42) formed on both ends of a lower portion thereof, locking catches (45) respectively provided on both sides of a top surface of the main body (10) at locations corresponding to those of the locking pins (41) and each having stop protrusions (46) locked by the locking hooks (42), and housings (49) for accommodating the locking catches (45) so that the locking catches (45) are inserted into or extracted from the housings (49),
wherein whenever the locking catches (45) are pressed by the locking pins (41), the locking catches (45) are repeatedly inserted into and extracted from the housings (49) such that the locking hooks (42) are locked to or unlocked from the stop protrusions (46), and
wherein the locking means (40) are locked when pressed once and unlocked when pressed once more.

2. The vacuum packaging machine of claim 1, wherein the controller (64) is configured to, when a magnitude of voltage received from the DC input terminal (63) is less than or equal to a reference voltage, display the magnitude of the voltage via a display module (6), thus providing notification that a capacity of a vehicle battery is deficient.

3. The vacuum packaging machine of claim 1, further comprising:
a heater (1) supplied with power from the controller (64) and configured to generate heat; and
a temperature sensor (7) configured to sense heating temperature of the heater (1) and allow the controller (64) to cut off supply of the power to the heater (1) when the heating temperature is equal to or greater than a reference temperature.

4. The vacuum packaging machine of any one of claims 1 to 3, wherein the controller (64) drives the pump (3) and the heater (1) in a vacuum mode or a semi-vacuum mode in compliance with a command signal.

5. The vacuum packaging machine of any one of claims 1 to 3,
wherein the main body (10) includes, on a top surface thereof, an intake connected to the pump (3), and a lower space-defining member provided to protrude and configured to define a space in which a mouth of a packaging film is inserted and arranged and in which the intake is arranged and to minimize inflow of external air into the space, and
wherein the main body (10) further includes:
a falling groove (15) formed in the space and configured to allow foreign materials, discharged from the packaging film during a packaging process, to fall to and accumulate in the falling groove (15), and
a discharge member (16) detachably provided in the falling groove (15) and configured to enable the foreign materials that have fallen and have accumulated in the falling groove (15) to be easily dumped.

## Patentansprüche

1. Vakuumverpackungsmaschine für Heim- und Fahrzeuggebrauch, umfassend:
ein Wechselstrom- (AC-) Eingangsterminal (61) zum Empfangen von handelsüblicher AC-Leistung;
einen Umschaltmodusleistungsversorgung SMPS (62) zum Umwandeln der von dem AC-Eingangsterminal (61) empfangenen handelsüblichen AC-Leistung in Gleichstrom- (DC-) Leistung;
ein DC-Eingangsterminal (63) zum Empfangen von DC-Leistung von einem Fahrzeug;
ein AC-DC-Kombinationsleistungsmodul mit einem Controller (64) zum Empfangen der DC-Leistung von dem SMPS (62) oder dem DC-Eingangsterminal (63) und zum Steuern eines Heizers (1) und einer Vakuumpumpe (3);
einen Hauptkörper (10), der die Pumpe (3) und den Heizer (1) enthält;
eine Abdeckung (20) zum Öffnen und Schließen des Hauptkörpers (10); und
**gekennzeichnet durch** eine Verriegelungseinrichtung (40), die Verriegelungsstifte (41) umfasst, die auf beiden jeweiligen Seiten einer Bodenoberfläche der Abdeckung (20) derart vorgesehen sind, dass sie von dort vorstehen, und die jeweils Verriegelungshaken (42) haben, die an beiden Enden eines unteren Bereichs davon gebildet sind, sowie Verriegelungsklinken (45), die an beiden jeweiligen Seiten einer oberen Oberfläche des Hauptkörpers (10) an Stellen vorgesehen sind, die jenen der Verriegelungsstifte (41) entsprechen, und die jeweils Stoppvorsprünge (46) haben, die durch die Verriegelungshaken (42) verriegelt sind, und Gehäuse (49) zum Unterbringen der Verriegelungsklinken (45) derart, dass die Verriegelungsklinken (45) in die Gehäuse (49) eingesetzt oder aus ihnen zurückgezogen werden,
wobei immer dann, wenn die Verriegelungsklinken (45) durch die Verriegelungsstifte (41) gedrückt werden, die Verriegelungsklinken (45) wiederholt in die Gehäuse (49) eingesetzt und aus ihnen zurückgezogen werden, derart, dass die Verriegelungshaken (42) mit den Stoppvorsprüngen (46) verriegelt oder von ihnen entriegelt werden, und
wobei die Verriegelungseinrichtung (40) bei einmaligem Drücken verriegelt und bei einem weiteren Drücken entriegelt wird.

2. Vakuumverpackungsmaschine nach Anspruch 1, wobei der Controller (64) dazu ausgelegt ist, dann, wenn eine Größe einer Spannung, die von dem DC-Eingangsterminal (63) empfangen wird, kleiner oder gleicher einer Referenzspannung ist, die Größe der Spannung mittels eines Anzeigemoduls (6) anzuzeigen und somit eine Benachrichtigung bereitzustellen, dass eine Kapazität einer Fahrzeugbatterie fehlerhaft ist.

3. Vakuumverpackungsmaschine nach Anspruch 1, ferner umfassend:
einen Heizer (1), der mit Leistung von dem Controller (64) versorgt wird und dazu ausgelegt ist, Wärme zu erzeugen; und
einen Temperatursensor (7), der dazu ausgelegt ist, eine Heiztemperatur des Heizers (1) zu messen und es dem Controller (64) zu ermöglichen, die Zufuhr von Leistung zu dem Heizer (1) zu unterbrechen, wenn die Heiztemperatur größer oder gleich einer Referenztemperatur ist.

4. Vakuumverpackungsmaschine nach einem der Ansprüche 1 bis 3, wobei der Controller (64) die Pumpe (3) und den Heizer (1) in einem Vakuummodus oder einem Halbvakuummodus in Übereinstimmung mit einem Befehlssignal treibt.

5. Vakuumverpackungsmaschine nach einem der Ansprüche 1 bis 3, wobei der Hauptkörper (10) an einer oberen Oberfläche davon einen Einlass umfasst, der mit der Pumpe (3) verbunden ist, sowie ein Element zur Definition eines unteren Raums, das derart vorgesehen ist, dass es vorsteht, und dazu ausgelegt ist, einen Raum zu definieren, in dem ein Mund eines Verpackungsfilms eingesetzt und angeordnet wird, und in dem der Einlass angeordnet ist, und zur Minimierung des Einfließens von Außenluft in den Raum, und
wobei der Hauptkörper (10) ferner umfasst:
eine Fallrille (15), die in dem Raum gebildet und dazu ausgelegt ist, es Fremdmaterialien, die von dem Verpackungsfilm während eines Verpackungsprozesses abgegeben werden, zu ermöglichen, auf die Fallrille (15) zu fallen und sich dort zu sammeln, und
ein Abgabeelement (16), das lösbar in der Fallrille (15) vorgesehen und dazu ausgelegt ist, eine einfache Entsorgung der Fremdmaterialien zu ermöglichen, die in die Fallrille (15) gefallen sind und sich dort angesammelt haben.

## Revendications

1. Machine à emballer sous vide pour une utilisation à domicile et dans un véhicule, comprenant :
une borne d'entrée de courant alternatif (CA) (61) pour recevoir une alimentation en courant alternatif du réseau extérieur ;
un bloc d'alimentation commutée SMPS (62) pour convertir l'alimentation en courant alternatif du réseau extérieur reçue en provenance de la borne d'entrée de courant alternatif (61) en alimentation en courant continu (CC) ;
une borne d'entrée de courant continu (63) pour recevoir une alimentation en courant continu en provenance d'un véhicule ;
un module d'alimentation combinée CA-CC comportant un dispositif de commande (64) pour recevoir l'alimentation en courant continu en provenance du SMPS (62) ou de la borne d'entrée de courant continu (63) et commander un élément chauffant (1) et une pompe à vide (3) ;
un corps principal (10) contenant la pompe (3) et l'élément chauffant (1) ;
un couvercle (20) pour ouvrir et fermer le corps principal (10) ; et
**caractérisée par** un moyen de verrouillage (40) comportant des goupilles de verrouillage (41) prévues respectivement sur les deux côtés d'une surface de dessous du couvercle (20) pour faire saillie depuis celle-ci et chacune ayant des crochets de verrouillage (42) formés sur les deux extrémités d'une portion inférieure de celle-ci, des loquets de verrouillage (45) prévus respectivement sur les deux côtés d'une surface de dessus du corps principal (10) à des emplacements correspondant à ceux des goupilles de verrouillage (41) et ayant chacun des saillies de butée (46) verrouillées par les crochets de verrouillage (42), et des logements (49) pour loger les loquets de verrouillage (45) de sorte que les loquets de verrouillage (45) soient insérés dans ou extraits des logements (49),
dans laquelle, à chaque fois que les loquets de verrouillage (45) sont enfoncés par les goupilles de verrouillage (41), les loquets de verrouillage (45) sont insérés dans et extraits de façon répétée des logements (49) de sorte que les crochets de verrouillage (42) soient verrouillés aux butées de verrouillage (46), ou déverrouillés de celles-ci, et
dans laquelle le moyen de verrouillage (40) est verrouillé lorsqu'il est enfoncé une fois et déverrouillé lorsqu'il est enfoncé une nouvelle fois.

2. Machine à emballer sous vide selon la revendication 1, dans laquelle le dispositif de commande (64) est configuré, lorsqu'une grandeur de tension reçue en provenance de la borne d'entrée de courant continu (63) est inférieure ou égale à une tension de référence, pour afficher la grandeur de la tension via un module d'affichage (6), fournissant ainsi une notification qu'une capacité d'une batterie de véhicule est déficiente.

3. Machine à emballer sous vide selon la revendication 1, comprenant en outre :
un élément chauffant (1) alimenté électriquement par le dispositif de commande (64) et configuré pour générer de la chaleur ; et
un capteur de température (7) configuré pour détecter une température de chauffage de l'élément chauffant (1) et permettre au dispositif de commande (64) de couper l'alimentation électrique à l'élément chauffant (1) lorsque la température de chauffage est supérieure ou égale à une température de référence.

4. Machine à emballer sous vide selon l'une quelconque des revendications 1 à 3, dans laquelle le dispositif de commande (64) entraîne la pompe (3) et l'élément chauffant (1) dans un mode sous vide ou un mode sous semi-vide conformément à un signal de commande.

5. Machine à emballer sous vide selon l'une quelconque des revendications 1 à 3,
dans laquelle le corps principal (10) comporte, sur une surface de dessus de celui-ci, une admission raccordée à la pompe (3), et un organe de définition d'espace inférieur prévu pour faire saillie et configuré pour définir un espace dans lequel un orifice d'un film d'emballage est inséré et agencé et dans lequel l'admission est agencée pour minimiser un afflux d'air externe dans l'espace, et
dans laquelle le corps principal (10) comporte en outre :
une rainure de chute (15) formée dans l'espace et configurée pour permettre à des matières étrangères, évacuées du film d'emballage pendant un processus d'emballage, de chuter sur et de s'accumuler dans la rainure de chute (15), et
un organe d'évacuation (16) prévu de façon amovible dans la rainure de chute (15) et configuré pour permettre de déverser facilement les matières étrangères qui ont chuté et se sont accumulées dans la rainure de chute (15).
